# FASCICULE DE BREVET EUROPEEN

(11) **EP 1 503 482 B1**
(45) Date de publication et mention de la délivrance du brevet: **17.09.2008**
(21) Numéro de dépôt: 04300429.0
(22) Date de dépôt: 06.07.2004
(51) Int. Cl.: H02K 7/102

(54) **Frein et machine electrique equipée d'un tel frein**
Bremse und elektrische Maschine mit einer derartigen Bremse
A brake and an electrical machine fitted with such a brake

(30) Priorité: 29.07.2003 FR 0309346
(43) Date de publication de la demande: 02.02.2005
(73) Titulaire: MOTEURS LEROY-SOMER, 16000 Angouleme (FR)
(72) Inventeur: CARRIOT, Pascal, 16400, LA COURONNE (FR)
(74) Mandataire: Tanty, François

(56) Documents cités:
- FR-A- 2 305 328
- US-A1- 2003 057 037

## Description

La présente invention concerne les freins pour machines électriques, notamment ceux destinés à équiper les moteurs électriques de certaines grues ou éoliennes.

Des moteurs électriques équipés de freins dits à manque de courant sont commercialisés depuis longtemps.

Ces freins comportent d'une part un disque de frein solidaire de l'arbre du moteur et portant une garniture de friction et d'autre part une armature qui est pressée contre la garniture de friction sous l'effet de ressorts. Un électroaimant permet d'éloigner l'armature du disque lorsqu'activé pendant le fonctionnement du moteur.

Lorsque le moteur est utilisé sur une grue ou éolienne, le déblocage du frein peut être nécessaire par exemple pour mettre en girouette la grue ou éolienne.

Un levier de commande est prévu pour déplacer l'armature contre l'action des ressorts lorsque l'on souhaite débloquer manuellement le frein. Lorsque ce levier est relâché, l'armature est à nouveau appliquée par les ressorts contre la garniture de friction du disque de frein.

FR 2 305 328 décrit un moteur électrique selon le préambule de la revendication 1, ce moteur est relativement complexe, faisant intervenir des carnes ou rampes.

Il existe un besoin pour perfectionner encore les freins connus, tout en garantissant la sécurité requise.

L'invention vise notamment à répondre à ce besoin.

La présente invention a pour objet un frein pour machine électrique, comportant :
- un carter,
- un disque de frein destiné à tourner avec un arbre de la machine,
- une armature mobile relativement au carter entre une position de freinage où elle s'applique contre le disque et une position écartée du disque,
- un électroaimant pour maintenir, lorsqu'alimenté en courant, l'armature dans sa position écartée,
- au moins un ressort tendant à amener l'armature en position de freinage,
- un organe de verrouillage agencé pour maintenir, dans une position de verrouillage, l'armature en position écartée, cet organe de verrouillage étant déplaçable relativement au carter entre la position de verrouillage et une position inactive permettant à l'armature de reprendre sa position de freinage,
- un actuateur électrique agencé pour permettre de déplacer à distance l'organe de verrouillage.

L'invention permet de réaliser un frein capable d'être débloqué manuellement ou électriquement, d'être maintenu à l'état débloqué par une commande manuelle ou électrique, et capable également de se réenclencher à la première mise sous tension du frein.

Le frein peut comporter un levier de commande manuelle du frein, articulé sur le carter. Ce levier de commande manuelle peut notamment comporter un étrier articulé sur le carter.

Dans une réalisation préférée, l'organe de verrouillage est également articulé sur le carter. L'organe de verrouillage peut notamment comporter un étrier disposé à l'opposé de celui du levier de commande manuelle.

L'organe de verrouillage peut être sollicité par un moyen de rappel élastique dans sa position inactive. La force exercée par ce moyen de rappel élastique peut être insuffisante pour amener l'organe de verrouillage en position inactive, quand l'organe de verrouillage est en position de maintien de l'armature en position écartée du disque et que l'armature est en appui contre une surface de l'organe de verrouillage.

Le frein peut comporter un détecteur agencé pour détecter la position de l'organe de verrouillage. Ce détecteur peut comporter un micro-contacteur par exemple.

Dans une réalisation particulière, l'organe de verrouillage comporte des bras agencés pour s'engager, lorsque l'organe de verrouillage est en position de verrouillage, sur des extensions radiales de l'armature. Ces extensions peuvent être reliées par des biellettes au levier de commande manuelle.

L'organe de verrouillage peut encore comporter une patte permettant de le déplacer manuellement.

L'invention a encore pour objet, selon un autre de ses aspects, un moteur électrique équipé d'un frein tel que défini plus haut.

L'invention pourra être mieux comprise à la lecture de la description détaillée qui va suivre, d'un exemple de mise en oeuvre non limitatif de celle-ci, et à l'examen du dessin annexé, sur lequel :
- la figure 1 est une vue schématique et partielle, en coupe axiale, d'un frein,
- la figure 2 est une coupe axiale, schématique et partielle, dans un autre plan que celui de la figure 1,
- la figure 3 représente de manière schématique, en perspective, le frein, et
- la figure 4 représente le frein de la figure 3 selon un autre angle de vue.

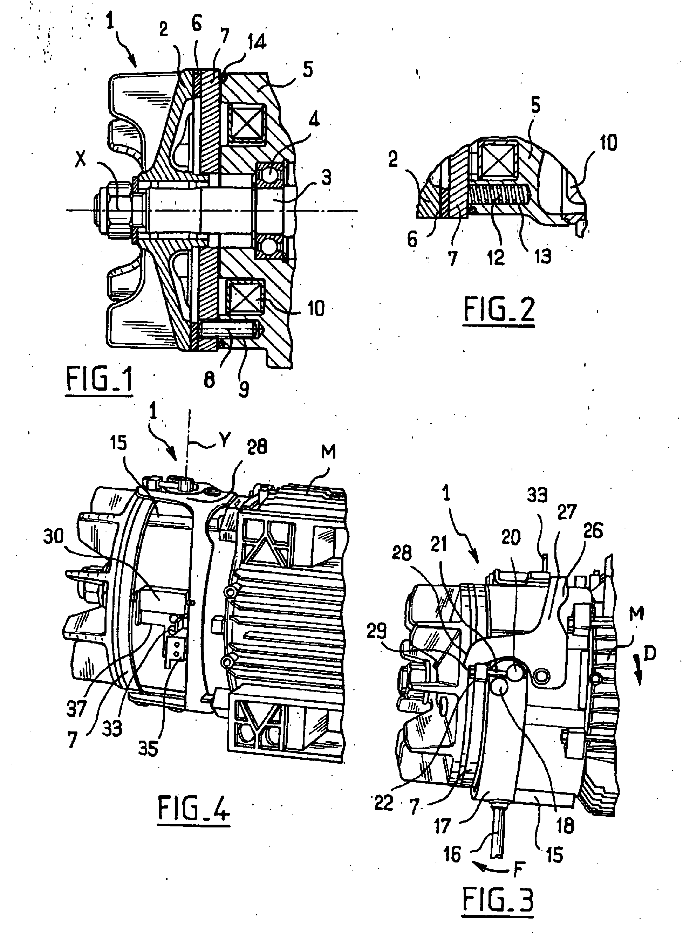

Le frein 1 représenté sur les figures comporte un disque de frein 2, tournant avec l'arbre 3 d'un moteur électrique M partiellement visible sur les figures 3 et 4, auquel le frein 1 est fixé.

L'arbre 3 tourne autour d'un axe géométrique de rotation X, étant guidé notamment par des roulements 4, par exemple à billes, logés dans une culasse 5 du frein.

Le disque 2 est muni, sur une face dans l'exemple considéré, d'une garniture de friction 6 qui peut frotter contre une armature 7 qui est guidée en translation selon l'axe X par des goupilles 8 engagées à une extrémité dans des logements correspondants 9 de la culasse 5, comme on peut le voir sur la figure 1.

Les goupilles 8 sont par exemple au nombre de trois, étant disposées à 120° les unes des autres autour de l'axe X.

Des ressorts 12, dont seul l'un d'entre eux est apparent sur la figure 2, exercent sur l'armature une poussée vers la gauche sur la figure 1, pour la plaquer contre la garniture de friction 6.

Ces ressorts 12 sont par exemple au nombre de trois, étant disposés angulairement entre les goupilles 8 dans des logements correspondants 13 de la culasse 5.

Un électroaimant 10 permet de déplacer l'armature 7 selon l'axe X, entre une position de freinage où celle-ci est appliquée contre la garniture de friction 6 par les ressorts 12 et une position dite de déblocage du frein, dans laquelle l'armature 7 est suffisamment écartée de la garniture de friction 6 pour n'exercer aucun couple de freinage sensible sur l'arbre 3.

Un joint torique 14 s'interpose élastiquement entre la culasse 5 et l'armature 7 lorsque celle-ci est dans sa position de déblocage du frein.

L'électroaimant 10 est alimenté en courant électrique simultanément avec le moteur M, ce qui permet une libre rotation de l'arbre 3. Lorsqu'il est nécessaire de freiner l'arbre 3, l'alimentation électrique de l'électroaimant 10 est coupée, et les ressorts 12 appliquent l'armature 7 contre la garniture de friction 6 du disque 2.

Le frein 1 comporte, comme on peut le voir sur les figures 3 et 4, un carter 15 qui est fixé par exemple par boulonnage sur le moteur M. En variante, le carter du frein et celui du moteur sont réalisés d'un seul tenant.

Un levier 16 comportant un étrier 17 articulé sur le carter 15 par deux pivots 18, autour d'un axe géométrique de rotation perpendiculaire à l'axe X, permet de déplacer manuellement l'armature 7.

L'étrier 17 porte des axes 20, tournant autour d'un axe géométrique de rotation Y perpendiculaire à l'axe X, dans lesquels sont engagées à une extrémité des biellettes 21, ces dernières prenant appui à l'extrémité opposée sur des extensions radiales 22 de l'armature 7, de telle sorte qu'un mouvement du levier 16 dans le sens de la flèche F de la figure 3 s'accompagne d'un déplacement vers la droite de l'armature 7 et d'un déblocage du frein.

Conformément à un aspect de l'invention, le frein 1 comporte un organe de verrouillage 27 qui permet de maintenir l'armature 7 en position de déblocage du frein, même en l'absence de force exercée sur le levier 16.

L'organe de verrouillage 27 comporte un étrier 26 pourvu de deux bras 28 dont les extrémités respectives comportent des décrochements 29 agencés pour servir d'appui à des extensions correspondantes 22 de l'armature 7, lorsque l'organe de verrouillage 27 est en position de maintien du frein en position débloquée, comme représenté à la figure 3. Dans cette position, l'armature 7 repose contre les décrochements 29 des deux bras 28 et les ressorts 12 sont comprimés.

Les étriers 17 et 26 s'étendent sur des côtés opposés du carter 15, comme on peut le voir sur la figure 3 notamment.

Il subsiste un léger jeu entre l'armature 7 et la culasse 5 lorsque l'organe de verrouillage 27 est en position de verrouillage.

L'étrier 26 de l'organe de verrouillage 27 est sollicité élastiquement en rotation dans le sens de la flèche D par un actuateur 30 comportant un ressort, non apparent sur le dessin. Ce ressort peut être hélicoïdal, à lame, spirale, à gaz ou autre encore. Le cas échéant, l'étrier 26 peut être sollicité en rotation dans le sens de la flèche D par son propre poids.

Ce moyen de rappel de l'organe de verrouillage en position inactive permet un retour automatique du frein en position de freinage en cas de poussée sur le levier 16 dans le sens de la flèche F ou d'activation de l'électroaimant 10. En effet, lorsque l'armature 7 est déplacée vers la droite sur la figure 3, c'est-à-dire de façon à comprimer davantage les ressorts 12, l'appui entre l'armature 7 et les décrochements 29 cesse ou les contraintes sont diminuées et l'étrier 26 peut pivoter dans le sens de la flèche D sous l'effet de rappel de l'actuateur 30 dans l'exemple considéré. L'organe de verrouillage 27 prend alors une position décalée dans laquelle les bras 28 ne gênent plus le retour de l'armature 7 vers la gauche sous l'effet des ressorts 12. L'armature 7 peut ainsi s'appliquer à nouveau contre la garniture de friction 6 du disque 2 si le levier 16 est relâché ou si l'activation de l'électroaimant 10 cesse.

Le cas échéant, le rappel de l'organe de verrouillage en position inactive peut être facilité par les vibrations à la mise en marche du moteur.

L'étrier 26 comporte une patte 33 permettant de le déplacer manuellement, si nécessaire.

L'actuateur 30 est également agencé de manière à, lorsqu'alimenté électriquement, exercer une force sur l'étrier 26 qui tend à le faire pivoter dans le sens inverse de la flèche D.

On peut ainsi, en alimentant électriquement l'électroaimant 10, amener l'armature 7 dans une position écartée de la garniture de friction 6 puis en alimentant l'actuateur 30 amener l'organe de verrouillage 27 dans une position de maintien de l'armature 7 en position écartée de la garniture de friction 6, position que conserve ensuite l'organe de verrouillage 27 grâce à l'appui des extensions 22 sur les bras 28, même si l'alimentation de l'électroaimant 10 est coupée.

Le cas échéant, l'électroaimant 10 et l'actuateur 30 peuvent être alimentés simultanément.

Un détecteur 35 se présentant par exemple sous la forme d'un micro-contact actionné par l'étrier 26 permet de détecter lorsque l'organe de verrouillage 27 est dans une position de maintien de l'armature 7 en position de déblocage du frein.

Ce détecteur 35 peut être fixé sur le carter 15 du frein au moyen d'un support 37 portant également l'actuateur 30.

Dans toute la description, y compris les revendications, l'expression « comportant un » doit être comprise comme étant synonyme de « comportant au moins un », sauf si le contraire est spécifié.

Bien entendu, l'invention n'est pas limitée à l'exemple de réalisation qui vient d'être décrit.

On peut notamment modifier la forme de l'organe de verrouillage et l'agencement de l'actuateur ou du levier de commande manuelle.

Dans l'exemple illustré, le disque de frein est fixé axialement relativement à l'arbre du moteur. Le disque pourrait encore, en variante, comporter un moyeu cannelé et coulisser sur l'arbre sans pouvoir tourner relativement à ce dernier. Dans ce cas, le disque pourrait comporter par exemple des garnitures de friction sur deux faces opposées. Le frein pourrait encore comporter plus de deux disques de frein et armatures associées.

Les étriers 17 et 26 pourraient être disposés autrement, par exemple d'un même côté de la machine.

Dans une variante non illustrée, l'organe de verrouillage est agencé pour être sollicité en mouvement vers sa position inactive par le champ magnétique créé par l'électroaimant.

## Revendications

1. Frein (1) pour machine électrique, comportant ;
- un carter (15),
- un disque de frein (2) destiné à tourner avec un arbre (3) de la machine,
- une armature (7) mobile relativement au carter (15) entre une position de freinage où elle s'applique contre le disque (2) et une position écartée du disque (2),
- un électroaimant (10) pour maintenir, lorsqu'alimenté en courant, l'armature dans sa position écartée,
- au moins un ressort (12) tendant à amener l'armature (7) en position de freinage,
- un organe de verrouillage (27) agencé pour maintenir, dans une position de verrouillage, l'armature (7) en position écartée, cet organe de verrouillage étant déplaçable relativement au carter entre la position de verrouillage et une position inactive permettant à l'armature de reprendre sa position de freinage,
- un actionneur électrique (30) agencé pour permettre de déplacer à distance l'organe de verrouillage.
**caractérisé en ce que** l'organe de verrouillage comporte un étrier (26) pourvu de deux bras (28) agencés pour s'engager, lorsque l'organe de verrouillage est en position de sur des extensions radiales (22) de l'armature.

2. Frein selon la revendication précédente, **caractérisé par le fait qu'**il comporte un levier (16) de commande manuelle du frein, articulé sur le carter.

3. Frein selon la revendication 2, **caractérisé par le fait que** le levier de commande manuelle comporte un étrier (17) articulé sur le carter.

4. Frein selon l'une quelconque des revendications précédentes, **caractérisé par le fait que** l'organe de verrouillage (27) est articulé sur le carter.

5. Frein selon les revendications 3 et 4, **caractérisé par le fait que** l'étrier (26) de l'organe de verrouillage est disposé à l'opposé de celui (17) du levier de commande manuelle.

## Claims

1. A brake (1) for an electrical machine, the brake comprising:
. a casing (15);
. a brake disk (2) for rotating with a shaft (3) of the machine;
. an armature (7) movable relative to the casing (15) between a braking position in which it presses against the disk (2) and a position in which it is spaced apart from the disk (2);
. an electromagnet (10) for holding the armature in its spaced-apart position when the electromagnet is powered;
. at least one spring (12) tending to bring the armature (7) into its braking position;
. a locking member (27) arranged, when in a locking position, to hold the armature (7) in its spaced-apart position, said locking member being movable relative to the casing between its locking position and an inactive position which enables the armature to return to its braking position,
. an electric motor (30) arranged to allow the locking member to be moved remotely,
**characterized in that** the locking member comprises a fork (26) provided with two arms (28) arranged, when the locking member is in its locking position, to engage radial extensions (22) of the armature.

2. A brake according to the preceding claim, **characterized by** the fact that it includes a manual brake control lever (16) hinged to the casing.

3. A brake according to claim 2, **characterized by** the fact that the manual control lever includes a fork (17) hinged to the casing.

4. A brake according to any preceding claim, **characterized by** the fact that the locking member (27) is hinged to the casing.

5. A brake according to claims 3 and 4, **characterized by** the fact that the fork (26) of the locking member is disposed opposite the fork (17) of the manual control lever.

6. A brake according to any preceding claim, **characterized by** the fact that the locking member (27) is urged by resilient return means into its inactive position, and by the fact that the force exerted by said resilient return means is not sufficient to bring the locking member (27) into its inactive position while the locking member is in its position for holding the armature (7) in its position spaced apart from the disk (2) and the armature (7) is bearing against a surface of the locking member (27).

7. A brake according to any preceding claim, **characterized by** the fact that it includes a detector (35) arranged to detect the position of the locking member.

8. A brake according to the preceding claim, **characterized by** the fact that said detector comprises a microswitch.

9. A brake according to claim 2, **characterized by** the fact that the extensions (22) are connected by pegs (21) to the manual control lever.

10. A brake according to any preceding claim,
**characterized by** the fact that the control member includes a tab (33) enabling it to be moved manually.

11. A brake according to claim 1, **characterized by** the fact that the locking member (27) is arranged to be urged to move towards its inactive position by the magnetic field created by the electromagnet (10).

12. An electric motor fitted with a brake as defined in any preceding claim.

## Patentansprüche

1. Bremse (1) für eine elektrische Maschine, umfassend:
- ein Gehäuse (15),
- eine Bremsscheibe (2), die zur Drehung mit einer Welle (3) mit der Maschine vorgesehen ist,
- einem Ausrüstungsteil (7), das gegenüber dem Gehäuse (15) zwischen einer Bremsposition, in welchem es gegen die Scheibe (2) anliegt, und einer von der Scheibe (2) entfernten Position beweglich ist,
- einem Elektromagneten (10) zum Halten des Ausrüstungsteils in seiner entfernten Position, wenn der Elektromagnet unter Strom gesetzt ist,
- zumindest eine Feder (12), die das Ausrüstungsteil (7) in die Bremsposition drückt,
- ein Verriegelungsorgan (27), das dazu vorgesehen ist, das Ausrüstungsteil (7) in einer Verriegelungsposition in der entfernten Position zu halten, welches Verriegelungsorgan gegenüber dem Gehäuse zwischen der Verriegelungsposition und einer inaktiven Position verschiebbar ist, in der das Ausrüstungsteil seine Bremsposition wieder einnehmen kann,
- einem elektrischen Aktuator (30) zur Verschiebung des Verriegelungsorgans aus der Entfernung,
**dadurch gekennzeichnet, dass** das Verriegelungsorgan einen Bügel (26) mit zwei Armen (28) umfaßt, die dazu vorgesehen sind, an radialen Erweiterungen (22) des Ausrüstungsteils anzugreifen, wenn das Verriegelungsorgan sich in der Verriegelungsposition befindet.

2. Bremse gemäß dem vorhergehenden Anspruch, **gekennzeichnet durch** einen manuellen Steuerhebel (16) der Bremse, der gelenkig mit dem Gehäuse verbunden ist.

3. Bremse gemäß Anspruch 2, **dadurch gekennzeichnet, dass** der manuelle Steuerhebel einen Bügel (17) umfaßt, der gelenkig mit dem Gehäuse verbunden ist.

4. Bremse gemäß einem der vorhergehenden Ansprüche, **dadurch gekennzeichnet, dass** das Verriegelungsorgan (27) gelenkig mit dem Gehäuse verbunden ist.

5. Bremse gemäß den Ansprüchen 3 oder 4, **dadurch gekennzeichnet, dass** der Bügel (26) des Verriegelungsorgans dem Bügel (17) des manuellen Steuerhebels gegenüberliegend angeordnet ist.

6. Bremse gemäß einem der vorhergehenden Ansprüche, **dadurch gekennzeichnet, dass** das Verriegelungsorgan (27) durch ein elastisches Rückhaltemittel in seiner inaktiven Position gehalten wird, und dass die durch das elastische Rückhaltemittel ausgeübte Kraft nicht ausreichend ist, um das Verriegelungsorgan (27) in der inaktiven Position zu halten, wenn das Verriegelungsorgan sich in der Position zum Halten des Ausrüstungsteils (7) in der von der Scheibe (2) entfernten Position befindet, und dass das Ausrüstungsteil (7) an einer Oberfläche des Verriegelungsorgans (27) anliegt.

7. Bremse gemäß einem der vorhergehenden Ansprüche, **gekennzeichnet durch** einen Detektor (35) zur Ermittlung der Position des Verriegelungsorgans.

8. Bremse gemäß einem der vorhergehenden Ansprüche, **dadurch gekennzeichnet, dass** der Detektor einen Mikroschalter umfaßt.

9. Bremse gemäß Anspruch 2, **dadurch gekennzeichnet, dass** die Erweiterungen (22) durch Schaltgestänge (21) mit dem manuellen Steuerhebel verbunden sind.

10. Bremse gemäß einem der vorhergehenden Ansprüche, **dadurch gekennzeichnet, dass** das Verriegelungsorgan eine Lasche (33) zur manuellen Betätigung umfaßt.

11. Bremse gemäß Anspruch 1, **dadurch gekennzeichnet, dass** das Verriegelungsorgan (27) dazu vorgesehen ist, in seine inaktive Position durch das Magnetfeld des Elektromagneten (10) gedrückt zu werden.

12. Elektromotor, der mit einer Bremse gemäß einem der vorhergehenden Ansprüche ausgestattet ist.
